# EUROPEAN PATENT APPLICATION

(11) **EP 3 372 332 A1**
(43) Date of publication of application: **12.09.2018**
(21) Application number: 16862231.4
(22) Date of filing: 07.11.2016
(51) Int. Cl.: B23G 3/00, B23Q 15/00, G05B 19/18

(54) **MANUFACTURING METHOD FOR COMPOUND SCREW AND MANUFACTURING PROGRAM FOR COMPOUND SCREW**

(30) Priority: 05.11.2015 JP 2015217360
(71) Applicant: Nejilaw Inc., Tokyo 108-6028 (JP)
(72) Inventor: MICHIWAKI Hiroshi, Tokyo 135-0064 (JP)
(74) Representative: Gamba, Alessandro
(86) International application number: PCT/JP2016/082921
(87) International publication number: WO 2017/078174

(57) **Abstract**

Provided is a manufacturing method for a compound screw having a first thread groove and a second thread groove with a different lead angle or lead direction from the first thread groove, wherein at least a portion of the first thread groove is formed by feeding a threading tool that acts on a workpiece a first feed amount toward the workpiece, the workpiece being a rotating object to be machined. Additionally, at least a portion of the second thread groove is formed by feeding the threading tool that acts on the workpiece a second feed amount that differs from the first feed amount. With these steps, a compound thread portion is formed in the workpiece. As a result, it is possible to mass produce a compound screw having two thread structures of differing lead angles and/or lead directions with a high level of quality.

## Description

### Technical Field

Embodiments of the present invention relate to a manufacturing method for a compound screw.

### Background Art

A male threaded body such as a bolt and a female threaded body such as a nut may be used as a fastening structure. In such a fastening structure using the threaded bodies, two types of spiral grooves (for example, a right-handed male threaded portion and a left-handed male threaded portion) having different lead angles and/or lead directions may be formed for a single male threaded body. In addition, two types of female threaded bodies (for example, a right-handed female threaded portion and a left-handed female threaded portion) may be screwed with the two types of the spiral grooves, respectively, like a double nut. Here, by restricting a relative rotation of the two types of the female threaded bodies using an engaging device, an axial interference action or an axial separation and returning action by the different lead angles and/or lead directions may prevent mechanical loosening with the male threaded body (refer to Japanese Patent Publication No. 5406168).

### Disclosure of Invention

### Technical Goals

With the propagation of a male threaded body having two types of male screws with different lead angles and/or lead directions, that is, a compound screw, mass production thereof is required in the future. To satisfy a great demand, the mass production needs to be implemented at low cost, and the two types of the male screws need to be formed with respect to a female threaded body with a high accuracy. The same applies to a female threaded body having two types of female screws with different lead angles and/or lead directions. The screws may also be formed by rolling or pressing. However, in a case in which a screw has a great size or a special shape, a screw includes a material with a great rigidness or a low toughness, or a necessary quantity of screws is less than a predetermined quantity, rolling or pressing is not suitable.

In addition, in a case of manufacturing a screw fastener using an existing threading machining method, only a lathe is used. However, in a case of using a lathe for threading machining of a compound screw, so-called burrs are severely created on a threaded portion, and thus a deburring process is essential. In addition, threads are damaged, an accuracy decreases remarkably, and a lifespan of a blade decreases greatly. From the above points, machining at a practical level was considered impossible in a lathe. Meanwhile, according to a threading process using a machining center, it is verified in detail by the present inventor that a compound screw may be manufactured with a high accuracy. However, a relatively long machining time and an extremely high cost are required.

The present invention has been made by the earnest research of the present inventor in view of the above issues, and an aspect of the present invention provides a method that may enable high-accuracy, high-quality and quick machining and mass production of a male threaded body or female threaded body having two types of male-screw structures with different lead angles and/or lead directions using a threading process.

### Technical solutions

According to an aspect of the present invention, there is provided a compound screw manufacturing method of manufacturing a compound screw having a first thread groove and a second thread groove with a different lead angle and/or lead direction from the first thread groove, the compound screw manufacturing method including a first thread groove forming step of forming at least a portion of a first thread groove by a first threading path obtained by feeding a threading tool that acts on a workpiece to be machined a first feed amount in a feed direction practically parallel to a rotation axis, the workpiece rotating about a predetermined axis as the rotation axis, and a second thread groove forming step of forming at least a portion of a second thread groove by a second threading path obtained by feeding the threading tool that acts on the workpiece a second feed amount in the feed direction practically parallel to the rotation axis, the second feed amount differing from the first feed amount.

According to an aspect of the present invention, there is provided a compound screw manufacturing method of manufacturing a compound screw having a first thread groove and a second thread groove with a different lead angle and/or lead direction from the first thread groove, the compound screw manufacturing method including a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and a second thread groove forming step of forming at least a portion of a second thread groove by a second threading path obtained by feeding the threading tool that acts on the workpiece in the first feed direction, the workpiece rotating in a reverse direction of the first direction.

According to an aspect of the present invention, there is provided a compound screw manufacturing method of manufacturing a compound screw having a first thread groove and a second thread groove with a different lead angle and/or lead direction from the first thread groove, the compound screw manufacturing method including a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and a second thread groove forming step of forming at least a portion of a second thread groove by a second threading path obtained by feeding the threading tool that acts on the workpiece in a reverse direction of the first feed direction, the workpiece rotating in the same direction as the first direction.

The compound screw manufacturing method may further include a circumferential groove forming step of machining a groove that circles in a direction orthogonal to the axis, at a machining start position by the second thread groove forming step on the workpiece.

At least one of the first thread groove forming step and the second thread groove forming step may be performed multiple times.

The second thread groove forming step may be performed at any time while the first thread groove forming step is being performed multiple times.

The first thread groove forming step may be performed at any time while the second thread groove forming step is being performed multiple times.

When a plurality of consecutive first thread groove forming steps is defined as a first step group and a plurality of consecutive second thread groove forming steps is defined as a second step group, a plurality of first step groups and a plurality of second step groups may be performed alternately.

The first thread groove forming step and the second thread groove forming step may be performed alternately.

A threading cross-sectional area, cut by the first thread groove forming step, of a cross section including the rotation axis of the first thread groove may decrease gradually or stepwise each time the first thread groove forming step is repeated multiple times, and a threading cross-sectional area, cut by the second thread groove forming step, of a cross section including the rotation axis of the second thread groove may decrease gradually or stepwise each time the second thread groove forming step is repeated multiple times.

According to an aspect of the present invention, there is provided a compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform a first thread groove forming step of forming at least a portion of a first thread groove by a first threading path obtained by feeding a threading tool that acts on a workpiece to be machined a first feed amount in a feed direction practically parallel to a rotation axis, the workpiece rotating about a predetermined axis as the rotation axis, and a second thread groove forming step of forming at least a portion of a second thread groove by a second threading path obtained by feeding the threading tool that acts on the workpiece a second feed amount in the feed direction practically parallel to the rotation axis, the second feed amount differing from the first feed amount.

According to an aspect of the present invention, there is provided a compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and a second thread groove forming step of forming at least a portion of a second thread groove by a second threading path obtained by feeding the threading tool that acts on the workpiece in the first feed direction, the workpiece rotating in a reverse direction of the first direction.

According to an aspect of the present invention, there is provided a compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and a second thread groove forming step of forming at least a portion of a second thread groove by a second threading path obtained by feeding the threading tool that acts on the workpiece in a reverse direction of the first feed direction, the workpiece rotating in the same direction as the first direction.

### Effects

According to the present invention, a male threaded body or female threaded body having two types of male-screw structures with different lead angles and/or lead directions may be produced in large quantities with high quality, irrespective of a size of a screw.

### Brief Description of Drawings

FIG. 1 illustrates a configuration of machining equipment to which a compound screw manufacturing method is applied according to a first embodiment.
FIG. 2 illustrates a threading path of a compound screw manufacturing method according to the first embodiment.
FIGS. 3(A) and 3(B) illustrate a compound screw manufacturing method according to the first embodiment, and FIGS. 3(C) and 3(D) illustrate a compound screw manufacturing method according to a second embodiment.
FIG. 4 illustrates a compound screw manufacturing method according to a third embodiment.
FIG. 5 illustrates a distribution of a threading allowance for each threading step of screw threading machining, in the compound screw manufacturing methods according to the first to third embodiments.
FIG. 6(A) illustrates an enlarged view of a male threaded portion of a male threaded body manufactured by the compound screw manufacturing method, and FIG. 6(B) illustrates an enlarged view of the male threaded portion.
FIG. 7 illustrates relative operations when screwing a first female threaded body and a second female threaded body having different lead directions, with respect to a male threaded body manufactured by the compound screw manufacturing method.
FIG. 8 illustrates an enlarged view of a female threaded portion of a female threaded body manufactured by the compound screw manufacturing method.
FIG. 9(A) illustrates a step of forming a circumferential groove being a threading path in a compound screw manufacturing method according to the first embodiment, and FIGS. 9(B) and 9(C) illustrate shapes of the circumferential groove.

### Best Mode for Carrying Out the Invention

Hereinafter, embodiments will be described in detail with reference to the accompanying drawings.

First, examples of structures and actions of a male threaded body and a female threaded body that may be manufactured by a manufacturing method according to embodiments will be described.

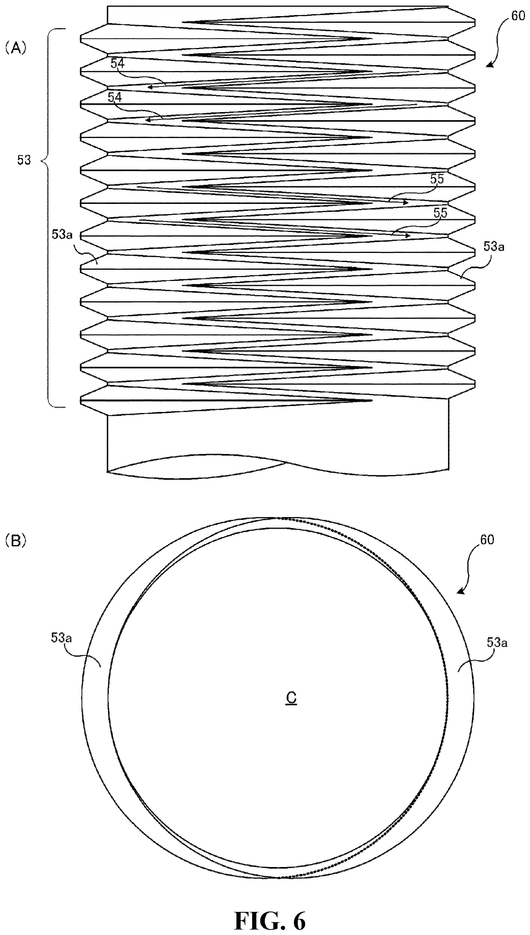

FIG. 6(A) illustrates a male threaded body 60 having a compound screw structure. The male threaded body 60 includes two types of spiral grooves (a right-handed male threaded portion and a left-handed male threaded portion) having different lead directions, with respect to a shaft.

The male threaded body 60 includes a male threaded portion 53 installed from a base side toward a shaft end, the male threaded portion 53 having a male-screw spiral structure. In this example, two types of male-screw spiral structures, for example, a first male-screw spiral structure 54 being a right-handed screw configured to screw a spiral section of a female-screw shape serving as a corresponding right-handed screw, and a second male-screw spiral structure 55 being a left-handed screw configured to screw a spiral section of a female-screw shape serving as a corresponding left-handed screw, are formed repeatedly on the same region of the male threaded portion 53. As shown in FIG. 6(B), an approximately crescentic thread 53a extending in a circumferential direction with respect to a planar direction perpendicular to a center of axis (screw axis) C is installed alternately on one side (the left side of the figure) and another side (the right side of the figure) of the male threaded portion 53. By configuring the thread 53a as described above, two types of spiral grooves having a spiral structure to circle clockwise and a spiral structure to circle counterclockwise may be formed between the threads 53a. Here, the first and second spiral structures 54 and 55 may form a single screw, and the first male-screw spiral structure 54 serving as the right-handed screw and the second male-screw spiral structure 55 serving as the left-handed screw have the same lead angle and different lead directions.

Thus, the male threaded body 60 may be screwed with any female threaded body of the right-handed screw and the left-handed screw. In addition, with respect to the details of the male threaded body 60 having two types of male-screw spiral structures, references are made to Japanese Patent Publication No. 4663813 related to the inventor of the present application.

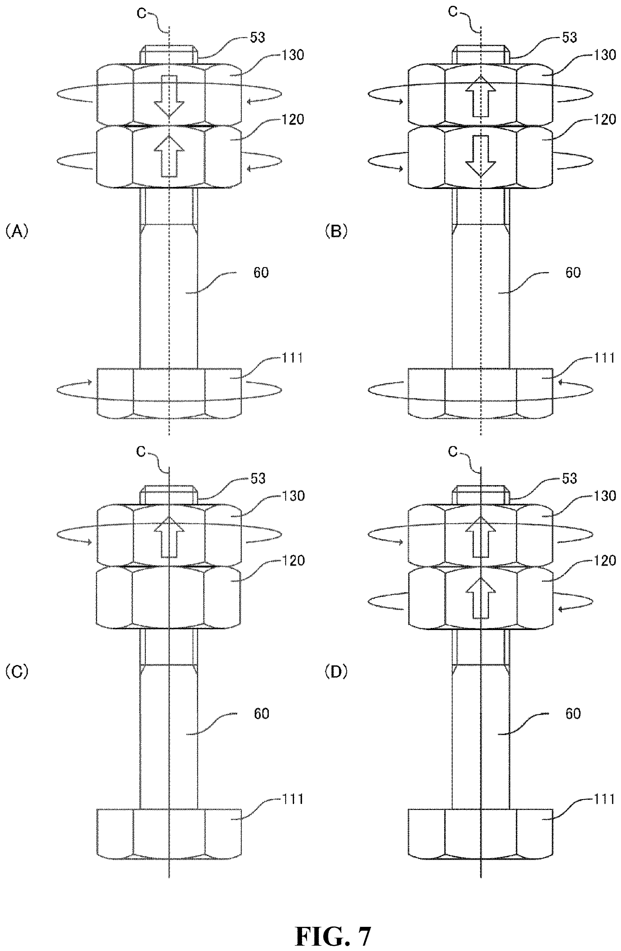

FIGS. 7(A) through 7(D) illustrate relative operations of a first female threaded body 120 and a second female threaded body 130 screwed with the male threaded body 60. The first female threaded body 120 and the second female threaded body 130 have a relationship of reverse screws. As shown in FIGS. 7(A) and 7(B), when rotating the first female threaded body 120 and the second female threaded body 130 in the same direction with respect to a male threaded body 110 (or when rotating the male threaded body 60), the first female threaded body 120 and the second female threaded body 130 move in reverse directions along a center of axis C.

In detail, as shown in FIG. 7(A), in a case in which the first female threaded body 120 and the second female threaded body 130 rotate counterclockwise when viewed from a side of the second female threaded body 130 (the top of FIG. 7(A)), the first female threaded body 120 and the second female threaded body 130 move close to each other along the center of axis C. As shown in FIG. 7(B), in a case in which the first female threaded body 120 and the second female threaded body 130 rotate clockwise when viewed from the side of the second female threaded body 130 (the top of FIG. 7(B)), the first female threaded body 120 and the second female threaded body 130 move away from each other along the center of axis C.

Thus, by restricting the relative movement (to be close or apart) of the first female threaded body 120 and the second female threaded body 130 in a direction of the center of axis C, both the first female threaded body 120 and the second female threaded body 130 may be prevented from rotating in the same direction with respect to the male threaded body 60. That is, relative positions of the first female threaded body 120 and the second female threaded body 130 on the male threaded portion 53 of the male threaded body 60 may be preserved and maintained, whereby screw fastening may be preserved and maintained under a predetermined condition. Further, if the first female threaded body 120 and the second female threaded body 130 are in contact with each other, they may not approach each other any further. Thus, in practice, a restriction on the first female threaded body 120 and the second female threaded body 130 moving away from each other may be sufficient. Of course, to prevent such a re-alienation while alienating separation the first female threaded body 120 and the second female threaded body 130 beforehand, a fastening preserving and maintaining member (not shown) may be used to restrict a movement in an alienating direction. In this example, while enabling a relative movement of a proximate alienation within a preset or predetermined range, an alienation beyond the predetermined range may be prevented.

In addition, by restricting the relative movement of the first female threaded body 120 and the second female threaded body 130 in the direction of the center of axis C as described above, a sole rotation of one of the first female threaded body 120 and the second female threaded body 130 to be spaced apart from the other one may be prevented as shown in FIG. 7(C). However, the restriction on the relative movement of the first female threaded body 120 and the second female threaded body 130 in the direction of the center of axis C may not prevent the first female threaded body 120 and the second female threaded body 130 from concurrently rotating in reverse directions. In this example, as shown in FIG. 7(D), the first female threaded body 120 and the second female threaded body 130 may change their positions on the male threaded portion 53 while maintaining their relative positions in the direction of the center of axis C.

Thus, by preserving and maintaining the first female threaded body 120 and the second female threaded body 130 using the fastening preserving and maintaining member, the relative movement of the first female threaded body 120 and the second female threaded body 130 in the direction of the center of axis C may be restricted and the relative rotation of the first female threaded body 120 and the second female threaded body 130 may also be restricted, whereby a loosening preventing effect may be achieved definitely.

In addition, although a case in which a male threaded body becomes a compound screw is described above, an example of forming two types of spiral grooves (for example, a right-handed female thread groove and a left-handed female thread groove) having different lead angles and/or lead directions with respect to an inner circumferential surface of a cylindrical portion of a single female threaded body, and respectively screwing two types of male threaded bodies (for example, a right-handed male threaded body and a left-handed male threaded body) with the two types of spiral grooves may also be considered.

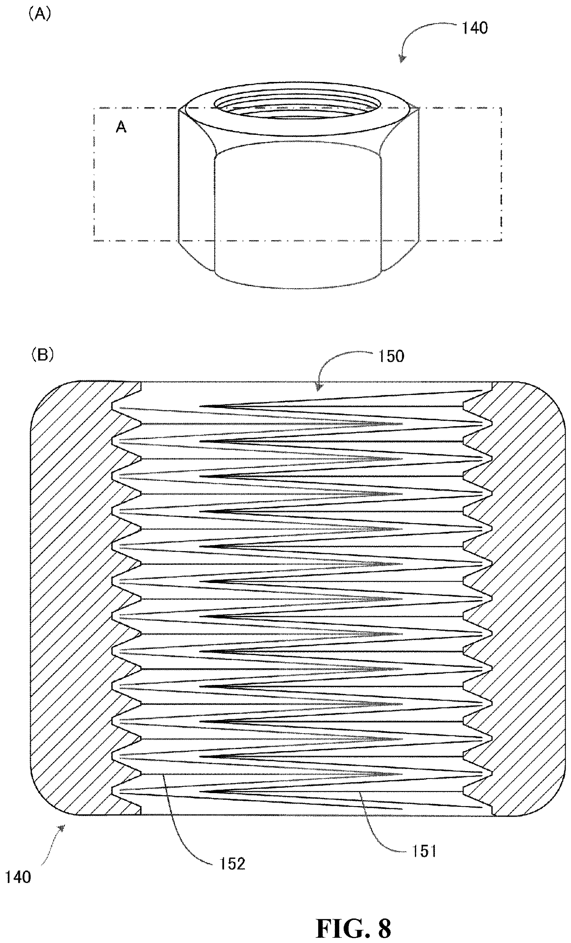

FIG. 8(A) illustrates a female threaded body 140 of a compound screw structure including two types of spiral grooves (for example, a right-handed female thread groove and a left-handed female thread groove) having the same lead angle and different lead directions. FIG. 8(B) illustrates a cross-sectional view of the compound screw, cut along a virtual plane A shown in FIG. 8(A).

The female threaded body 140 includes a female threaded portion 150 installed toward both ends thereof, the female threaded portion 150 having a female-screw spiral structure. In this example, two types of female-screw spiral structures, for example, a first female-screw spiral structure 151 being a right-handed screw and a second female-screw spiral structure 152 being a left-handed screw, are formed repeatedly on the same region of the female threaded portion 150. The first female-screw spiral structure 151 may screw a spiral section of a male-screw shape of a corresponding right-handed screw. The second female-screw spiral structure 152 may be configured to screw a spiral section of a male-screw shape serving as a corresponding left-handed screw. A compound screw manufacturing method of the present invention may also be applied to such a female threaded body.

Hereinafter, a compound screw manufacturing method (hereinafter, the manufacturing method) according to a first embodiment and a compound screw manufacturing program will be described.

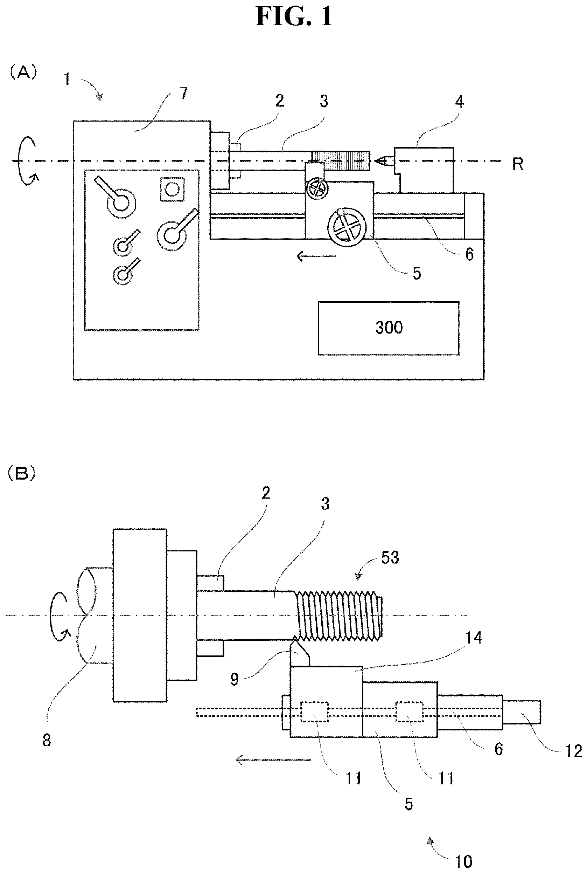

FIG. 1(A) illustrates compound screw machining equipment 1 to which the manufacturing method according to the first embodiment is applied. The compound screw machining equipment 1 includes a chuck device 2 to support a workpiece 3 being a machining target on a main shaft 8 (not shown, to be described later), a rotator (not shown since being included in a headstock 7) to rotate the main shaft 8, the headstock 7 to fix the above elements, a feeder 5 to move with a threading tool fixed, a feed screw shaft 6 to drive the same, and a controller 300 to control the above elements. The compound screw machining equipment 1 further includes a tailstock 4 to prevent shaking of a machining target when machining a long object. Screw machining by threading is performed on the cylindrical workpiece 3 being the machining target, the workpiece 3 rotating about an axis R as a rotation axis. The workpiece 3 is machined by a threading tool 9 (bite) acting on the workpiece 3. By machining the workpiece 3 using the threading tool 9, the male threaded portion 53 is formed on the workpiece 3. Further, the controller 300 includes a central processing unit (CPU) and a storage device (memory), and controls the variety of devices of the compound screw machining equipment 1 to implement the manufacturing method described later when the compound screw manufacturing program stored in the storage device is executed by the CPU.

The workpiece 3 is a cylindrical member, is supported with respect to a rotating portion having a predetermined rotation axis, and rotates about the axis R as the rotation axis. A rotation axis of the main shaft 8 corresponds to the axis R being the rotation axis of the workpiece 3. That is, the workpiece 3 is supported by the chuck device 2 while being disposed concentrically with respect to the main shaft 8, and rotates in a predetermined direction about the axis R as the rotation axis in response to a rotation of the main shaft 8. A rotating direction may be set to change at random, and a rotating velocity may also change. In addition, the machining equipment may be a so-called numerically-controlled (NC) lathe capable of automatic threading by a program.

FIG. 1(B) illustrates a top view of main parts of the compound screw machining equipment 1. The workpiece 3 is supported by the chuck device 2 while being disposed concentrically with respect to the main shaft 8. A feeding device 10 includes the feeder 5 and the feed screw shaft 6. The threading tool 9 is fastened to a threading tool clamping stand 14, and the threading tool clamping stand 14 is fixed and supported on the feeder 5. The feed screw shaft 6 rotates by a servomotor 12, and the feeder 5 moves rectilinearly in a longitudinal direction of the feed screw shaft 6 through a nut portion 11 fixed to the feeder 5. As the threading tool 9 moves along the feeder 5, the workpiece 3 is threaded spirally such that the male threaded portion 53 is formed. In the example of FIG. 1(B), the main shaft 8 rotates counterclockwise and the workpiece 3 rotates in the same direction accordingly, when viewed from the tailstock 4 toward the headstock 7.

In this example, when viewed from the tailstock 4 toward the headstock 7, the threading tool 9 is attached to a threading surface on a left side of the workpiece 3 in a vertically upward direction. The threading tool 9 threads an outer circumferential surface of the workpiece 3 to an appropriate threading depth, and the threading tool 9 moves in a direction perpendicular to a rotating direction of the main shaft (that is, a radially inner side of the workpiece 3). As the threading tool 9 moves in a direction from the tailstock 4 to the headstock 7 while the workpiece 3 is rotating, an end of the threading tool 9 interferes with the workpiece 3 such that a spiral groove is threaded.

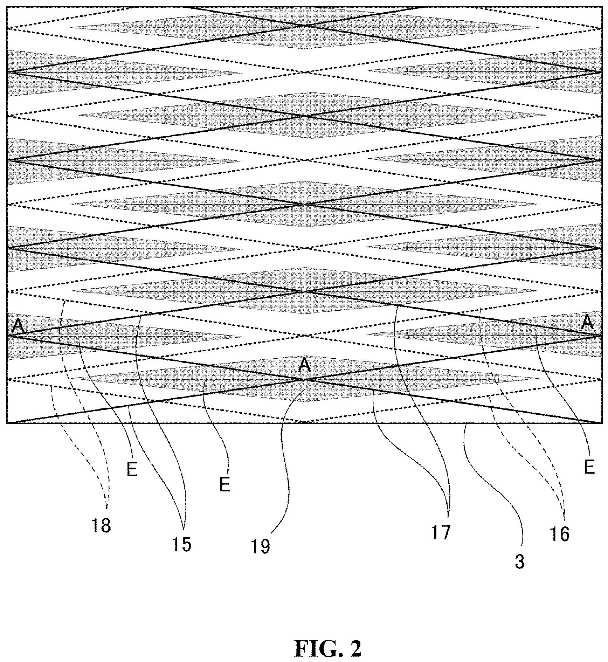

FIG. 2 illustrates a threading path along which the threading tool 9 passes a surface of the workpiece 3, in the manufacturing method according to the first embodiment. Further, with reference to FIG. 2, a threading path for forming two types of spiral grooves (for example, a right-handed male thread groove and a left-handed male thread groove) having the same lead angle and different lead directions will be described.

In detail, in the manufacturing method, a first threading path 16 is obtained by feeding the threading tool 9 that acts on the workpiece 3 a first feed amount in a first feed direction practically parallel to a rotation axis, and a second threading path 18 is obtained by feeding the threading tool 9 that acts on the workpiece 3 a feed amount the same as the first feed amount in a direction opposite to the first feed direction. A first thread groove is formed by the first threading path 16. A second thread groove is formed by the second threading path 18. Further, the first threading path 16 and the second threading path 16 may have different lead angles and/or different lead directions. Here, they have coincident lead angles and opposite lead directions.

In other words, a first thread with a crest corresponding to a solid line 15 is formed on a boundary of a plurality of first threading paths 16, and a first thread with a crest corresponding to a solid line 17 is formed on a boundary of a plurality of second threading paths 18.

In doing so, the threading tool 9 is relatively moved along the first and second threading paths 16 and 18 to thread the workpiece 3 to form spiral grooves by rotating the the workpiece 3. When the threading is completed, the intersecting thread portions 15 and 17 are supposed to stay. However, the thread portions intersect each other in the middle of threading. Hence, what is left as a thread portion of the compound screw is an approximately diamond-shaped region A in FIG. 2. Further, although not particularly shown, the approximately diamond-shaped region A protrudes in a shape of an approximate diamond, when viewed from an axial direction. In this example, if the shape of the approximately diamond-shaped region A is not formed accurately, shanking may occur when fastening the male threaded body to the female threaded body, or it may be impossible to fasten the male threaded body to the female threaded body. In particular, a ridge E formed in the approximately diamond-shaped region A to extend in a circumferential direction may be formed as a single line with no width or narrow width. Thus, to form the ridge E with a high accuracy, threading should be performed more accurately, than a case of manufacturing a typical right-handed screw body or left-handed screw body through screw threading machining. Therefore, the manufacturing method to be described later becomes suitable. In addition, although not shown, the shape of the approximately diamond-shaped region A does not require a crest including a portion at which the intersecting thread portions 15 and 17 intersect as a peak, and a small diamond-shaped region forming a shape of an approximate diamond on the same cylindrical surface (flat surface in the development view) on which a radius from an axis of the male threaded body becomes the same may be installed.

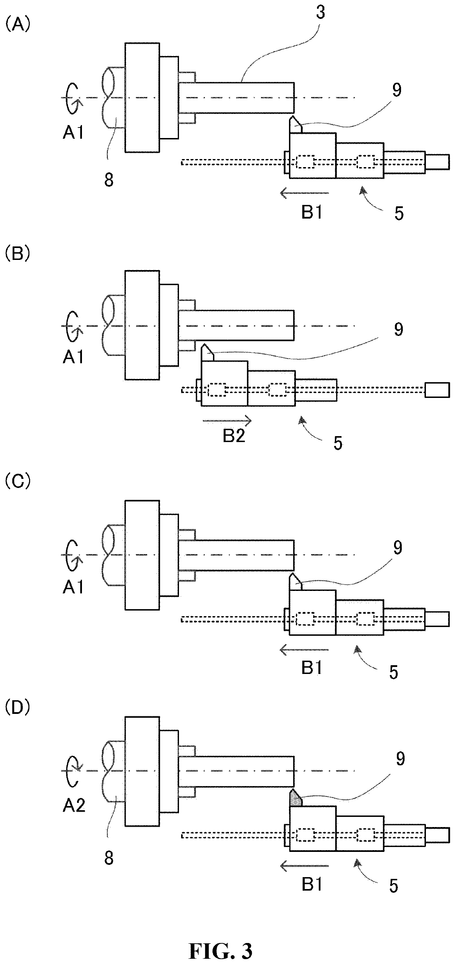

Hereinafter, a first thread groove forming step and a second thread groove forming step of the manufacturing method according to the first embodiment will be described with reference to FIGS. 3(A) and 3(B).

In the first thread groove forming step of FIG. 3(A), a first thread groove (right-handed male-screw spiral structure) is threaded by the first threading path 16. In the second thread groove forming step of FIG. 3(B), a second thread groove (left-handed male-screw spiral structure) is threaded by the second threading path 18. In the first thread groove forming step, threading is performed using the first threading path 16, from an end portion of the the tailstock 4 of the workpiece 3 toward the headstock 7. Further, when initiating threading from an end surface of the workpiece 3, a threading depth may be adjusted easily.

The workpiece 3 rotates counterclockwise (rotating direction A1) when viewed from the tailstock 4 toward the headstock 7, and meanwhile, the feeder 5 moves in a direction of an arrow B1 from the tailstock 4 toward the headstock 7. Further, the threading tool 9 is attached to a threading surface on a left side in a vertically upward direction, when viewed from the tailstock 4 toward the headstock 7. When the threading tool 9 reaches an end that forms a screw, it shifts to a state of FIG. 3(B). Of course, in a case in which the threading tool 9 is positioned on a right side when viewed from the tailstock 4 toward the headstock 7, the threading surface of the surface the threading tool 9 may be disposed in a vertically downward direction. In any case, the threading surface of the threading tool 9 may be disposed to face a rotating direction of the workpiece 3.

In the second thread groove forming step of FIG. 3(B), threading is performed using the second threading path 18, from the headstock 7 of the workpiece 3 toward the tailstock 4.

The workpiece 3 rotates counterclockwise (rotating direction A1) when viewed from the tailstock 4 toward the headstock 7. That is, the rotation of the workpiece 3 in the first thread groove forming step is continued. At the same time, the feeder 5 moves in a direction of an arrow B2 from the the headstock 7 toward the tailstock 4. Further, the threading tool 9 is attached to a threading surface on a left side in a vertically upward direction, when viewed from the tailstock 4 toward the headstock 7. An installing posture of the threading tool 9 is the same as that in the first thread groove forming step of FIG. 3(A).

By alternately repeating the first thread groove forming step of FIG. 3(A) and the second thread groove forming step of FIG. 3(B) multiple times, the workpiece 3 is threaded repeatedly, and consequently the male threaded portion 53 of the male threaded body 60 is completed. In doing so, since the threading tool 9 only needs to move back and forth in the longitudinal direction of the workpiece 3, a margin of error for a feed amount may be minimized and a threading accuracy may be improved. Further, threading may be performed while approximating a threading amount of the first thread groove (right-handed male-screw spiral structure) and a threading amount (threading speed) of the second thread groove (left-handed male-screw spiral structure). Thus, the ridge of the thread 53a (the approximately diamond-shaped region A in the development view of FIG. 2) may be accurately formed. Further, since threading is performed slowly while alternately changing a direction of the path at every predetermined number of times, a threading amount may be controlled to be a minimum state in which a threading difference between the intersecting portions of the paths is below a predetermined level, and thus threading machining may be performing without causing a blur.

Further, depending on a depth of a thread groove, the threaded portion 53 may be completed in a single reciprocation, or the threaded portion 53 may be completed through multiple reciprocations. To increase a lifespan of the threading tool 9, a thread groove may be formed slowly through multiple reciprocations.

In addition, an order of the steps of FIGS. 3(A) and 3(B) may be appropriately determined based on a material of the workpiece 3, or a lead angle or lead direction of a desired compound screw. For example, the second thread groove forming step of FIG. 3(B) may be performed while repeating the first thread groove forming step of FIG. 3(A) multiple times. Similarly, the first thread groove forming step of FIG. 3(A) may also be performed while repeating the second thread groove forming step of FIG. 3(B) multiple times. In any case, by including a process of alternately performing the first thread groove forming step and the second thread groove forming step at least in part, a shape accuracy of the thread 53a may increase.

Further, when consecutively performing the first thread groove forming step of FIG. 3(A) multiple times is defined as a first step group, and consecutively performing the second thread groove forming step of FIG. 3(B) multiple times is defined as a second step group, a single second thread groove forming step or second step group may be interposed while performing the first step group multiple times. Similarly, a single first thread groove forming step or first step group may be interposed while performing the second step group multiple times. Also, the first step group and the second step group may be alternately repeated.

Furthermore, in the manufacturing method according to the first embodiment, the threading tool 9 does not have to be detached. In a case of alternately repeating the first thread groove forming step and the second thread groove forming step, the feeder 5 only needs to move back and forth in a longitudinal direction of the feed screw shaft 6, whereby a manufacturing efficiency may increase. In addition, in a case of an NC lathe, programming may be easy and spiral grooves of a compound screw may be formed accurately.

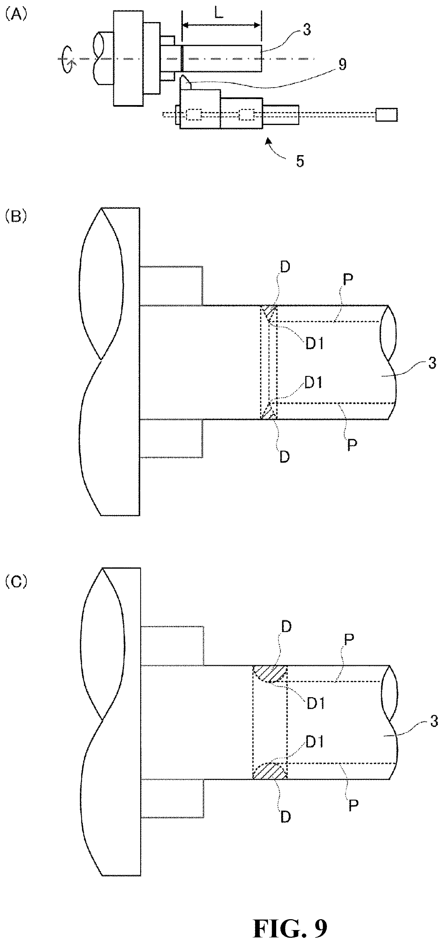

In addition, before performing the first thread groove forming step of moving a blade while threading by interfering with a workpiece from a front end of the workpiece, and the second thread groove forming step of moving the blade in an opposite direction with respect to the first thread groove forming step, a circumferential groove forming step of machining a groove that circles in a direction orthogonal to an axis, at an axial portion of the workpiece 3 corresponding to a length L of the threaded portion from the front end of the workpiece 3 toward the other end (base end) being chucked by the chuck device 2, or a vicinity position including the portion, or a start position of a base end of the second thread groove may be set, as shown in FIG. 9(A). As shown in FIG. 9(A), the circumferential groove forming step of machining a groove that circles in a direction orthogonal to an axis, at an axial portion of the workpiece 3 corresponding to a length L of the threaded portion from the front end of the workpiece 3 toward the other end (base end) being chucked by the chuck device 2, or a vicinity position including the portion, or a start position of a base end of the second thread groove may be set. Hence, a circumferential groove D may be formed on the workpiece 3, before the first thread groove forming step and the second thread groove forming step. As shown in FIG. 9(B), a depth of a bottom of the circumferential groove D formed by the circumferential groove forming step may be greater than or equal to a root diameter of the threaded portion. That is, a bottom portion D1 of the circumferential groove D may be positioned at the same position as a root diameter line P of the threaded portion or at a radially inner position than the same. Further, a cross-sectional shape of the circumferential groove D may be a cross-sectional shape with an area greater than or equal to a V-shaped cross-sectional shape being a cross-sectional shape of a valley between threads of the threaded portion, for example, a U-shaped cross-sectional shape, a rectangular cross-sectional shape, or a trapezoidal cross-sectional shape. Further, as shown in FIG. 9(C), a shape of a root of the circumferential groove D may include a shape having an approximately arcuate cross section with a radius greater than or equal to a necessary and sufficient size. In this example, a tensile strength or a fatigue strength at the circumferential groove D of the completed compound screw may improve.

In doing so, when the circumferential groove D is formed before the first thread groove forming step and the second thread groove forming step, a threading start position of the second thread groove forming step may be set within the circumferential groove D. Chipping or cracking of the blade of the threading tool may be suppressed, and a lifespan of the blade may remarkably improve.

Further, herein, a case of performing the circumferential groove forming step before performing the first thread groove forming step and the second thread groove forming step is described. The present invention is not limited thereto. For example, the circumferential groove forming step may be performed consecutively after a first iteration of the first thread groove forming step by the first threading path, and a first iteration of the second thread groove forming step may be performed after the circumferential groove D is formed at a start position of the second thread groove forming step. That is, a timing for performing the circumferential groove forming step may be appropriately set depending on purposes.

Hereinafter, a manufacturing method and a manufacturing program according to a second embodiment will be described. The manufacturing method performs machining using the compound screw machining equipment 1 of FIG. 1, and includes a first thread groove forming step of FIG. 3(C) and a second thread groove forming step of FIG. 3(D).

In the first thread groove forming step of FIG. 3(C), a right-handed male-screw spiral groove structure is threaded. In the first thread groove forming step of FIG. 3(D), a left-handed male-screw spiral structure is threaded.

In the first thread groove forming step, threading is performed using the first threading path 16, from an end portion of the the tailstock 4 of the workpiece 3 toward the headstock 7. The workpiece 3 rotates counterclockwise (rotating direction A1) when viewed from the tailstock 4 toward the headstock 7, and meanwhile, the feeder 5 moves in a direction of an arrow B1 from the tailstock 4 toward the headstock 7. Further, the threading tool 9 is attached to a threading surface on a left side in a vertically upward direction, when viewed from the tailstock 4 toward the headstock 7. When the threading tool 9 reaches an end that forms a screw, it shifts to a state of FIG. 3(D).

In the second thread groove forming step of FIG. 3(D), like the first thread groove forming step, threading is performed using the second threading path 18, from the end portion of the tailstock 4 of the workpiece 3 toward the headstock 7.

The workpiece 3 rotates clockwise (rotating direction A1) when viewed from the tailstock 4 toward the headstock 7. That is, the workpiece 3 rotates in a reverse direction in the second thread groove forming step, with respect to the rotation of the workpiece 3 in the first thread groove forming step. In doing so, a moving direction of the threading tool 9 is set to be the same direction (arrow B1) of the first thread groove forming step. Further, the threading tool 9 is attached to a threading surface on a left side in a vertically upward direction, when viewed from the tailstock 4 toward the headstock 7, which is also the same as in the first thread groove forming step of FIG. 3.

In the manufacturing according to the second embodiment, threading may be started from the end portion of the tailstock 4 of the workpiece 3 in both the first thread groove forming step and the second thread groove forming step. Thus, a threading depth may be adjusted easily in any case.

Further, in the second example, like the first example, the male threaded portion 53 may be completed through a single process of the first thread groove forming step and the second thread groove forming step, or through multiple processes of the first thread groove forming step and the second thread groove forming step. To increase a lifespan of the threading tool 9, a thread groove may be formed slowly through multiple threading processes.

In addition, an order of the steps of FIGS. 3(C) and 3(D) may be appropriately determined based on a material of the workpiece 3, or a lead angle or lead direction of a desired compound screw. For example, the second thread groove forming step of FIG. 3(D) may be performed while repeating the first thread groove forming step of FIG. 3(C) multiple times. Similarly, the first thread groove forming step of FIG. 3(C) may also be performed while repeating the second thread groove forming step of FIG. 3(D) multiple times. In any case, by including a process of alternately performing the first thread groove forming step and the second thread groove forming step at least in part, a shape accuracy of the thread 53a may increase. By alternately machining as described above, threading may be performed while approximating a threading amount of the first thread groove (right-handed male-screw spiral structure) and a threading amount (threading speed) of the second thread groove (left-handed male-screw spiral structure). Thus, the ridge of the thread 53a (the approximately diamond-shaped region A in the development view of FIG. 2) may be accurately formed.

Further, when consecutively performing the first thread groove forming step of FIG. 3(C) multiple times is defined as a first step group, and consecutively performing the second thread groove forming step of FIG. 3(D) multiple times is defined as a second step group, a single second thread groove forming step or second step group may be interposed while performing the first step group multiple times. Similarly, a single first thread groove forming step or first step group may be interposed while performing the second step group multiple times. Also, the first step group and the second step group may be alternately repeated.

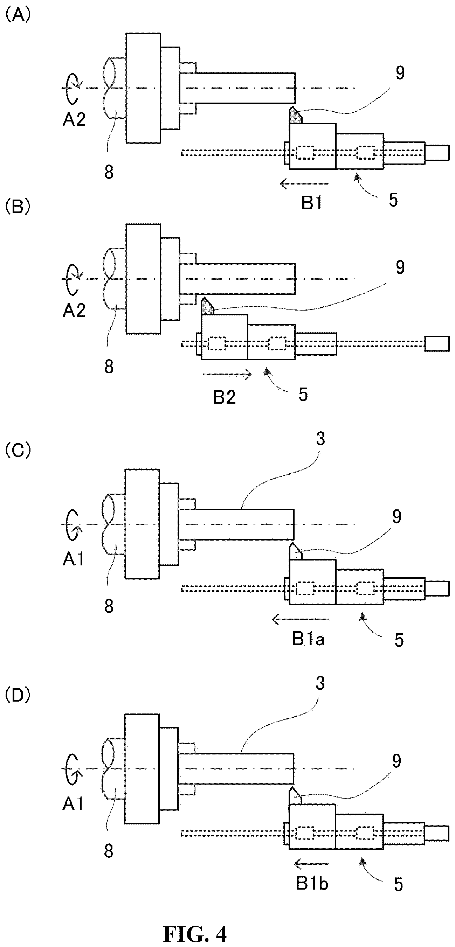

Hereinafter, a manufacturing method and a manufacturing program according to a third embodiment will be described. The manufacturing method performs machining using the compound screw machining equipment 1 of FIG. 1, and includes a second thread groove forming step of FIG. 4(A) and a first thread groove forming step of FIG. 4(B).

In the second thread groove forming step of FIG. 4(A). a left-handed male-screw spiral groove structure is threaded. In the first thread groove forming step of FIG. 4(B), a right-handed male-screw spiral structure is threaded.

In the second thread groove forming step, threading is performed using the second threading path 18, from an end portion of the tailstock 4 of the workpiece 3 toward the headstock 7. The workpiece 3 rotates clockwise (rotating direction A2) when viewed from the tailstock 4 toward the headstock 7, and meanwhile, the feeder 5 moves in a direction of an arrow B1 from the tailstock 4 toward the headstock 7. Further, the threading tool 9 is attached to a threading surface on a left side in a vertically downward direction, when viewed from the tailstock 4 toward the headstock 7. When the threading tool 9 reaches an end that forms a screw, it shifts to a state of FIG. 4(B).

In the first thread groove forming step of FIG. 4(B), threading is performed using the first threading path 16, from the headstock 7 of the workpiece 3 toward the tailstock 4. The workpiece 3 rotates clockwise (rotating direction A2) when viewed from the tailstock 4 toward the headstock 7. That is, the rotation of the workpiece 3 in the second thread groove forming step is continued. At the same time, the feeder 5 moves in a direction of an arrow B2 from the headstock 7 toward the tailstock 4. Further, the threading tool 9 is attached to a threading surface on a left side in a vertically downward direction, when viewed from the tailstock 4 toward the headstock 7, which is also the same as in the second thread groove forming step of FIG. 4(A).

By alternately repeating the second thread groove forming step of FIG. 4(A) and the first thread groove forming step of FIG. 4(B), a compound screw is formed. When the threading tool 9 is attached to the threading surface in a vertically downward direction, machining dust falls to the ground, and thus disposal of the machining dust is easy. Further, a threading resistance faces downward, and thus the main shaft does not rise up, whereby high-accurate and stable machining may be performed.

In addition, an order of the steps of FIGS. 4(A) and 4(B) may be appropriately determined based on a material of the workpiece 3, or a lead angle or lead direction of a desired compound screw. For example, the second thread groove forming step of FIG. 4(A) may be performed while repeating the first thread groove forming step of FIG. 4(B) multiple times. Similarly, the first thread groove forming step of FIG. 4(B) may also be performed while repeating the second thread groove forming step of FIG. 4(A) multiple times.

Further, when consecutively performing the first thread groove forming step of FIG. 4(B) multiple times is defined as a first step group, and consecutively performing the second thread groove forming step of FIG. 4(A) multiple times is defined as a second step group, a single second thread groove forming step or second step group may be interposed while performing the first step group multiple times. Similarly, a single first thread groove forming step or first step group may be interposed while performing the second step group multiple times. Also, the first step group and the second step group may be alternately repeated.

In addition, in the first to third embodiments, a case in which feed amounts (axial movement amounts per rotation of the workpiece 3, which may also be defined as lead angles) of the threading tool 9 in the first thread groove forming step and the second thread groove forming step match. The present invention is not limited thereto. Different feed amounts may be set between the first thread groove forming step and the second thread groove forming step.

Further, as an application of the first to third embodiments, although not particularly shown, a manufacturing method including a combination of the first thread groove forming step of FIG. 4(B) and the second thread groove forming step of FIG. 3(B) may be employed.

In addition, in the above embodiment, a case in which a compound screw to be manufactured has two types of spiral grooves (for example, a right-handed female thread groove and a left-handed female thread groove) with the same lead angle and different lead directions was described. However, the type of the compound screw is not limited thereto. For example, the compound screw may have two types of spiral grooves (for example, a first right-handed male thread groove and a second right-handed male thread groove, or a first left-handed male thread groove and a second left-handed male thread groove) with different lead angles and the same lead direction.

In this example, a manufacturing method including a first thread groove forming step of FIG. 4(C) and a second thread groove forming step of FIG. 4(D) may be employed.

In the first thread groove forming step of FIG. 4(C), a first right-handed male-screw spiral groove structure is threaded. In the second thread groove forming step of FIG. 4(D), a second right-handed male-screw spiral structure having the same lead direction as the right-handed male-screw spiral groove structure and different lead angles from the right-handed male-screw spiral groove structure.

In the first thread groove forming step, threading is performed using the first threading path 16, from an end portion of the tailstock 4 of the workpiece 3 toward the headstock 7. The workpiece 3 rotates counterclockwise (rotating direction A1) when viewed from the tailstock 4 toward the headstock 7, and meanwhile, the feeder 5 moves in a direction of an arrow B1a from the tailstock 4 toward the headstock 7. Further, the threading tool 9 is attached to a threading surface on a left side in a vertically upward direction, when viewed from the tailstock 4 toward the headstock 7. When the threading tool 9 reaches an end that forms a screw, the threading tool returns to its original location and it shifts to a state of FIG. 4(D).

In the second thread groove forming step of FIG. 4(D), like the first thread groove forming step, threading is performed using the second threading path 18 having the same lead direction and a different lead amount, from the end portion of the tailstock 4 of the workpiece 3 toward the headstock 7.

The workpiece 3 rotates counterclockwise (rotating direction A1) when viewed from the tailstock 4 toward the headstock 7. That is, the rotation of the workpiece 3 in the first thread groove forming step may be continued. The threading tool 9 has the same moving direction as in the first thread groove forming step. However, a feed amount thereof is set differently from that in the first thread groove forming step (arrow Bib). Further, the threading tool 9 is attached to a threading surface on a left side in a vertically upward direction, when viewed from the tailstock 4 toward the headstock 7, which is also the same as in the first thread groove forming step of FIG. 4(C).

In this manufacturing method, threading may be started from the end portion of the tailstock 4 of the workpiece 3 in both the first thread groove forming step and the second thread groove forming step. Thus, a threading depth may be adjusted easily in any case. Further, by appropriately adjusting only a feed amount of each step, various types of compound screws may be manufactured in freedom.

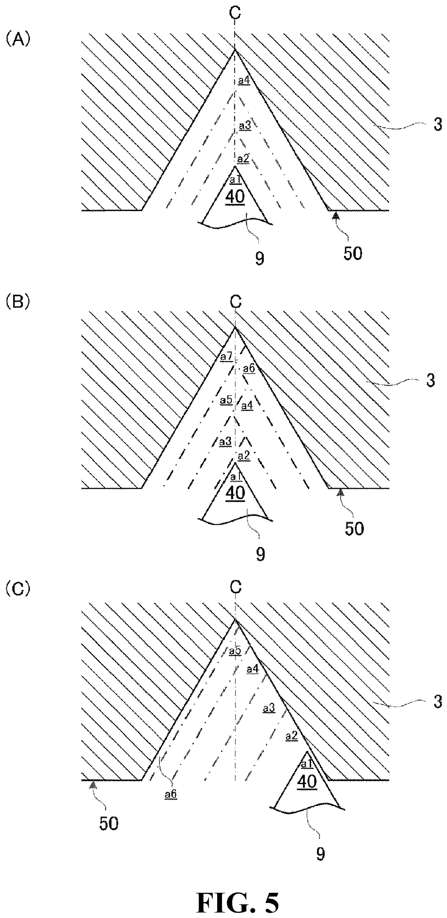

Hereinafter, a distribution of a threading allowance (machining allowance) for each of a first thread groove forming step and a second thread groove forming step, in a screw threading process performed according to the first to third embodiments will be described. FIG. 5(A) illustrates a threading method, so-called radial infeed. When applying a threading blade 40 of the threading tool 9 to an outer circumferential surface 50 of the workpiece 3, the outer circumferential surface of the workpiece 3 is perpendicularly threaded with an edge of the threading blade 40 fixed to a location coincident with a central position C of a thread groove to be formed. In each step of multiple first thread groove forming steps and multiple second thread groove forming steps, the threading tool 9 moves stepwise toward a radially inner side with the threading blade 40 fixed to the central position C of the thread groove, whereby the thread groove is completed.

Although the so-called radial infeed has an advantage of causing abrasion uniformly on the left and right sides of the threading blade 40, a threading resistance increases as a threading depth per time increases.

FIG. 5(B) illustrates a threading method, so-called alternate infeed (including zigzag threading). When applying the threading blade 40 to the outer circumferential surface 50 of the workpiece 3, threading is performed in a houndstooth shape (zigzag shape) with an edge of the threading blade 40 toward an radially inner side of the workpiece 3. In doing so, in a process of second and subsequent threading (excluding the first threading), the threading may be performed alternately using one of left and right surfaces of the threading blade 40, and a threading resistance may be reduced when compared to the radial infeed. Further, flank abrasion may occur uniformly on the left and right edges of the threading blade 40.

FIG. 5(C) illustrates a threading method, so-called frank infeed. When applying the threading blade 40 to the outer circumferential surface 50 of the workpiece 3, threading is performed along one side of a thread groove to be formed. Disposal of machining dust is easy and a threading resistance is small. However, the frank infeed has a disadvantage of causing severe abrasion on the one side of the threading blade 40. By the way, the manufacturing method according to embodiments of the present invention may employ any type of infeed.

Further, as a threading allowance (machining allowance) for each thread groove forming step, a threading cross-sectional area of a cross section including a rotation axis (section cut in an axial direction of the workpiece 3) of the thread groove may be reduced slowly or stepwise each time the thread groove forming step is repeated multiple times. For example, in the radial infeed of FIG. 5(A), a threading cross-sectional area a1 of a first iteration, a threading cross-sectional area a2 of a second iteration, a threading cross-sectional area a3 of a third iteration, and a threading cross-sectional area a4 of a fourth iteration may be a1≥a2≥a3≥a4. As described above, a relatively great threading cross-sectional area may be cut at the beginning and the threading cross-sectional area may be reduced toward an end of the threading process, whereby a machining accuracy may increase. In the alternate infeed of FIG. 5(B), machining is performed such that a1≥a2≥a3≥a4≥a5≥a6≥a7 is satisfied. In the frank infeed of FIG. 5(C), machining is performed such that a1≥a2≥a3≥a4≥a5≥a6 is satisfied. Of course, the threading allowance for each thread groove forming step is not limited to be reduced slowly or stepwise.

In addition, the compound screw manufacturing method and the compound screw manufacturing program according to embodiments of the present invention are not limited to the embodiments described above, and various changes may be made thereto without departing from the spirit and scope of the present invention.

For example, in a case of forming a single female threaded body having two types of female-screw structures with different lead angles and/or lead directions, a so-called a cutting bite is used as the threading tool 9, and a rotating direction thereof and a feeding direction of the feeder 5 are appropriately adjusted, as in the first through third embodiments.

## Claims

1. A compound screw manufacturing method of manufacturing a compound screw having a first thread groove and a second thread groove with a different lead angle and/or lead direction from the first thread groove, the compound screw manufacturing method comprising:
a first thread groove forming step of forming at least a portion of a first thread groove by a first threading path obtained by feeding a threading tool that acts on a workpiece to be machined a first feed amount in a feed direction practically parallel to a rotation axis, the workpiece rotating about a predetermined axis as the rotation axis; and
a second thread groove forming step of forming at least a portion of a second thread groove by a second threading path obtained by feeding the threading tool that acts on the workpiece a second feed amount in the feed direction practically parallel to the rotation axis, the second feed amount differing from the first feed amount.

2. A compound screw manufacturing method of manufacturing a compound screw having a first thread groove and a second thread groove with a different lead angle and/or lead direction from the first thread groove, the compound screw manufacturing method comprising:
a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis; and
a second thread groove forming step of forming at least a portion of a second thread groove by a second threading path obtained by feeding the threading tool that acts on the workpiece in the first feed direction, the workpiece rotating in a reverse direction of the first direction.

3. A compound screw manufacturing method of manufacturing a compound screw having a first thread groove and a second thread groove with a different lead angle and/or lead direction from the first thread groove, the compound screw manufacturing method comprising:
a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis; and
a second thread groove forming step of forming at least a portion of a second thread groove by a second threading path obtained by feeding the threading tool that acts on the workpiece in a reverse direction of the first feed direction, the workpiece rotating in the same direction as the first direction.

4. The compound screw manufacturing method of claim 3, further comprising:
a circumferential groove forming step of machining a groove that circles in a direction orthogonal to the axis, at a machining start position by the second thread groove forming step on the workpiece.

5. The compound screw manufacturing method of one of claims 1 to 4, wherein at least one of the first thread groove forming step and the second thread groove forming step is performed multiple times.

6. The compound screw manufacturing method of one of claims 1 to 4, wherein the second thread groove forming step is performed at any time while the first thread groove forming step is being performed multiple times.

7. The compound screw manufacturing method of one of claims 1 to 4, wherein the first thread groove forming step is performed at any time while the second thread groove forming step is being performed multiple times.

8. The compound screw manufacturing method of one of claims 1 to 4, wherein, when a plurality of consecutive first thread groove forming steps is defined as a first step group and a plurality of consecutive second thread groove forming steps is defined as a second step group, a plurality of first step groups and a plurality of second step groups are performed alternately.

9. The compound screw manufacturing method of one of claims 1 to 4, wherein the first thread groove forming step and the second thread groove forming step are performed alternately.

10. The compound screw manufacturing method of one of claims 1 to 9, wherein a threading cross-sectional area, cut by the first thread groove forming step, of a cross section including the rotation axis of the first thread groove decreases gradually or stepwise each time the first thread groove forming step is repeated multiple times, and
a threading cross-sectional area, cut by the second thread groove forming step, of a cross section including the rotation axis of the second thread groove decreases gradually or stepwise each time the second thread groove forming step is repeated multiple times.

11. A compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform:
a first thread groove forming step of forming at least a portion of a first thread groove by a first threading path obtained by feeding a threading tool that acts on a workpiece to be machined a first feed amount in a feed direction practically parallel to a rotation axis, the workpiece rotating about a predetermined axis as the rotation axis, and
a second thread groove forming step of forming at least a portion of a second thread groove by a second threading path obtained by feeding the threading tool that acts on the workpiece a second feed amount in the feed direction practically parallel to the rotation axis, the second feed amount differing from the first feed amount.

12. A compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform:
a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and
a second thread groove forming step of forming at least a portion of a second thread groove by a second threading path obtained by feeding the threading tool that acts on the workpiece in the first feed direction, the workpiece rotating in a reverse direction of the first direction.

13. A compound screw manufacturing program applied to a manufacturing apparatus for manufacturing a compound screw having a first thread groove and a second thread groove with a different lead angle and/or lead direction from the first thread groove, the compound screw manufacturing program configured to cause the manufacturing apparatus to perform:
a first thread groove forming step of forming at least a portion of a first thread groove by a first threading path obtained by feeding a threading tool that acts on a workpiece to be machined in a first feed direction practically parallel to a rotation axis, the workpiece rotating in a first direction about a predetermined axis as the rotation axis, and
a second thread groove forming step of forming at least a portion of a second thread groove by a second threading path obtained by feeding the threading tool that acts on the workpiece in a reverse direction of the first feed direction, the workpiece rotating in the same direction as the first direction.
